# FASCICULE DE BREVET EUROPEEN

(11) **EP 0 465 378 B1**
(45) Date de publication et mention de la délivrance du brevet: **23.08.1995**
(21) Numéro de dépôt: 91420193.4
(22) Date de dépôt: 14.06.1991
(51) Int. Cl.: H02B 1/40

(54) **Coffret d'appareils électriques basse tension**
Gehäuse für elektrische Niederspannungsgeräte
Low voltage electrical apparatus housing

(30) Priorité: 02.07.1990 FR 9008442
(43) Date de publication de la demande: 08.01.1992
(73) Titulaire: SCHNEIDER ELECTRIC SA, 92100 Boulogne Billancourt (FR)
(72) Inventeur: Buet, Jacques, F-38050 Grenoble Cedex (FR); Chambron, Robert, F-38050 Grenoble Cedex (FR); Bonnet, Jean-Marc, F-38050 Grenoble Cedex (FR); Grosset-Janin, Emile, F-38050 Grenoble Cedex (FR)
(74) Mandataire: Ritzenthaler, Jacques

(56) Documents cités:
- EP-A- 0 351 279
- FR-A- 2 579 839
- GB-A- 2 175 456

## Description

L'invention est relative à un coffret parallélépipèdique de logement d'appareillage électrique, comprenant un fond en forme de plaque, ayant deux rebords latéraux, un châssis avec des rails profilés transversaux de fixation de l'appareillage et des montants fixés audit fond et sur lesquels les rails sont fixés, la longueur des rails profilés étant inférieure à l'écartement des deux rebords latéraux pour ménager entre les extrémités des rails profilés et ces rebords, une goulotte d'introduction des câbles, un boîtier en forme de cadre rectangulaire de même dimension que le fond, un plastron d'obturation de la face avant du boîtier opposée au fond du coffret, ledit plastron ayant une lumière de passage de la partie antérieure de l'appareillage.

L'utilisation de coffrets électriques standards est de plus en plus fréquente, et il est important de faciliter la fixation du coffret et le montage des appareils à l'intérieur du coffret avec leurs connexions aux câbles d'entrée et de sortie. Dans les coffrets monoblocs, il est difficile de répartir les câbles à l'intérieur du coffret et de les connecter aux bornes qui sont difficilement accessibles. Des coffrets connus comportent un fond de support des rails d'encliquetage des appareils permettant la mise en place des appareils et le raccordement des câbles, avant la mise en place d'un capot coiffant l'ensemble. Cette mise en place peut être gênée par des câbles mal fixés ou maintenus, et le positionnement du capot pose de sérieux problèmes.

Le document EP-A-0351.279 décrit un coffret d'appareillage électrique comportant les caractéristiques décrites dans le préambule de la revendication 1. Ce coffret comprend principalement un fond autour duquel est fixé un cadre formant quatre rebords en saillie vers l'avant du coffret, un boîtier en forme de cadre fermé par un plastron, des panneaux latéraux interposés entre le fond et le boîtier, et un châssis constitué par deux montants fixés au fond précité et reliés par des rails transversaux supportant des appareils électriques. Ces appareils électriques sont raccordés à des câbles dits d'arrivée et de départ logés dans des goulottes respectivement supérieure et inférieure. Les câbles d'arrivée sont reliés directement aux appareils électriques, tandis que les câbles de départ sont acheminés par une goulotte latérale formée entre les rebords latéraux du fond et les montants, en étant reliés à des borniers ou des lyres fixé s sur le fond du coffret, et raccordés électriquement à la partie arrière des appareils.

On connaît également un document EP-A-0123.788 décrivant un coffret électrique comprenant un fond monobloc sur lequel sont fixés directement des rails de fixation supportant un appareillage électrique, et un boîtier en forme générale de cadre fixé sur le fond de manière à entourer l'appareillage. Dans ce document, la fixation du fond sur un support tel qu'un mur s'effectue en utilisant entre autres, des inserts rotatifs comportant chacun une ouverture oblongue, et placés de manière amovible dans des protubérances formées dans la paroi de fond.

Or ces deux types de coffret ne sont pas de conception simple et engendrent en conséquence un coût de fabrication relativement important.

L'invention a pour but de permettre la réalisation d'un coffret d'appareillage électrique facilitant le travail du monteur tout en conservant une standardisation et un coût de fabrication réduit.

Le coffret selon la présente invention est caractérisé en ce qu'il comporte au moins une plaque passe-câbles intercalée entre le boîtier et le fond pour obturer la face supérieure et/ou inférieure du coffret et comportant des ouvertures permettant l'introduction des câbles à l'intérieur du coffret, en ce que la tranche avant de la plaque passe-câbles en position montée est en saillie des tranches avant des deux rebords latéraux et affleure ou est en saillie vers l'avant du plan contenant les rails profilés, en ce que la longueur des rails profilés est supérieure à l'écartement des montants, et que la tranche avant des rebords latéraux est en retrait du plan contenant les rails profilés.

Les rebords latéraux du fond maintiennent latéralement les câbles, qui sont introduits à l'intérieur du coffret par le ou les plaques passe-câbles, disposées sur la face supérieure et/ou la face inférieure du coffret. En prévoyant une hauteur limitée des rebords latéraux, cette hauteur étant inférieure à l'écartement entre le fond et le rail profilé, il est possible de glisser les câbles à l'arrière du rail par la goulotte confinée par les extrémités des rebords latéraux et du rail profilé. Les câbles enfilés sont retenus par les rebords latéraux et par les parties des rails en saillie latérale. Avantageusement, les bords latéraux de la plaque formant fond sont pliés en équerre vers l'avant pour former les rebords latéraux précités. Les tranches des bords latéraux sont repliées vers l'intérieur pour éviter toute arête tranchante pouvant blesser le monteur lors de l'introduction des câbles dans le coffret, ces replis étant conformés en dièdre de centrage et de guidage du boîtier venant s'emboîter sur le fond. La tranche correspondante du boîtier est conformée en dièdre conjugué, de préférence concave pour empêcher toute introduction de corps étrangers, notamment de fils à l'intérieur de l'espace sensible du coffret. Les formes en dièdre facilitent également le logement d'un joint d'étanchéité intercalé entre les faces emboîtées.

La plaque passe-câbles s'étend sur toute la largeur du coffret et son bord antérieur est en saillie des rebords ou bords latéraux repliés pour disposer d'un espace maximal d'introduction des câbles. Cette plaque en matière plastique isolante évite toute détérioration des câbles, et elle présente avantageusement des parties défonçables ou prédécoupées pour le passage des câbles.

Selon un développement important de l'invention, quatre piliers sont fixés au fond du coffret pour assurer différentes fonctions et en premier lieu la fixation du coffret sur la paroi ou le mur de soutien. A cet effet chaque pilier comporte une patte latérale plaquée à la tôle de fond et portant un collet de grand diamètre, formant un logement partiellement borgne susceptible de recevoir un insert circulaire ayant un orifice diamètral oblong. La tôle de fond est perforée en regard du logement à un diamètre correspondant pour le passage d'un prolongement du collet solidaire du pilier, qui constitue à la fois un embout de centrage du pilier et une cale d'écartement du fond de la tôle par rapport au mur de fixation. Par rotation de l'insert, on peut amener l'orifice oblong en regard du trou de fixation ménagé dans le mur, même en cas de légers écarts de perçage, et d'introduire la vis à travers l'orifice oblong et la tôle de fond pour la visser dans l'orifice pratiqué dans le mur. Le pilier en matière plastique moulé comporte des systèmes d'encliquetage sur des parties conjuguées de la tôle de fond pour une fixation qui peut être complètée par rivetage ou tout autre moyen approprié. Les quatre piliers fixés au fond constituent les pièces de fixation du coffret et ils comportent quatre colonnes à filetage interne dans lesquelles se vissent les vis de fixation du boîtier. Les extrémités des colonnes sont avantageusement agencées en pions de centrage coopérant avec des parties conjuguées du boîtier venant s'y emboîter. Le châssis est également fixé aux quatre piliers qui sont disposés en regard des extrémités des quatre montants. Les montants en forme de U à entrée évasée s'emboîtent sur des pavés conjugués des piliers auxquels ils sont fixés par des boulons. Les montants sont légèrement écartés du fond pour offir un passage de câbles entre les montants et le fond. Les quatre colonnes encadrent avantageusement les quatre extrémités des montants et ces quatre colonnes ont une ou des faces inclinées en regard de ces extrémités pour faciliter la mise en place du châssis et son auto-centrage vers les pavés de fixation. L'écrou de la vis de fixation est inséré dans un logement correspondant du pilier d'une manière imperdable, ce qui facilite la fixation. Le perçage du trou dans le mur est facilité par un guide de perçage en forme de moyeu obturant le fond du logement de l'insert rotatif. Ce moyeu perforé, disposé dans l'axe du logement constitue un guide du forêt facilitant le perçage. Ce guide est enlevé automatiquement lors du perçage par entraînement par le foret qui casse des parties affaiblies de la matière plastique. Les quatre piliers sont avantageusement fixés en usine sur le fond et les inserts venant de moulage avec les piliers sont rattachés à ces derniers par des pattes brisables. Le monteur plaque la tôle de fond contre le mur et avec une perceuse perce les quatre trous dans le mur, le forêt étant guidé par le moyeu de guidage porté par le pilier. Après ce perçage, il suffit d'introduire dans le logement libéré du moyeu de guidage, l'insert à orifice oblong en le tournant pour compenser les légères erreurs de perçage et permettre la mise en place de la vis.

La tranche avant du boîtier présente une face avant inclinée vers l'intérieur,pour constituer un cadre d'encastrement partiel de la porte, cette face inclinée coopérant avec le joint d'étanchéité de la porte. La face inclinée est prolongée par une équerre décalée vers l'intérieur du coffret et constituant un rebord d'appui des plastrons de recouvrement des appareils fixés aux rails. Les coffrets comportent généralement plusieurs rails espacés en hauteur et à chaque rail est associé un plastron laissant passer l'avant des appareils avec leurs manettes de commande. Il est également possible de prévoir un plastron commun à l'ensemble ou à plusieurs rails de fixation. Les têtes des vis de fixation du boîtier sur le fond sont accessibles de la face avant et ces têtes sont avantageusement recouvertes par un volet ou cache améliorant l'esthétique du coffret. Les rails sont fixés aux montants avec interposition d'entretoises et ils présentent un profil symétrique d'encliquetage des appareils modulaires. Sur les montants peuvent également être fixées des platines de supports d'appareils de tête de tableau ou de profils non standards.

Le châssis et le boîtier sont décrits plus en détail dans deux demandes de brevets déposés conjointement et intitulées respectivement: Châssis de fonction d'appareils électriques dans un coffret; et Coffret basse tension.

D'autres avantages ressortiront plus clairement de la description qui va suivre d'un mode de mise en oeuvre de l'invention donné à titre d'exemple non limitatif et représenté aux dessins annexés dans lesquels:

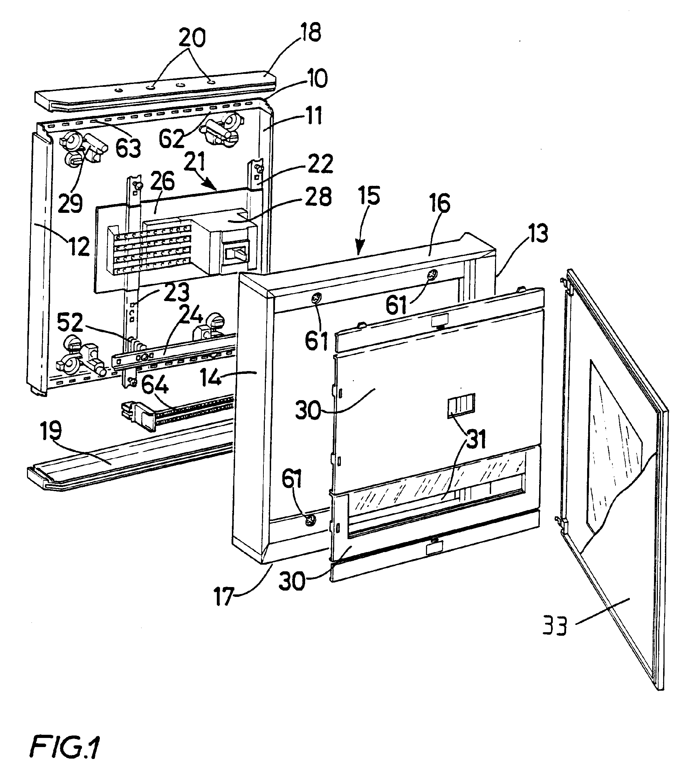

- la figure 1 est une vue schématique éclatée en perspective d'un coffret selon l'invention;

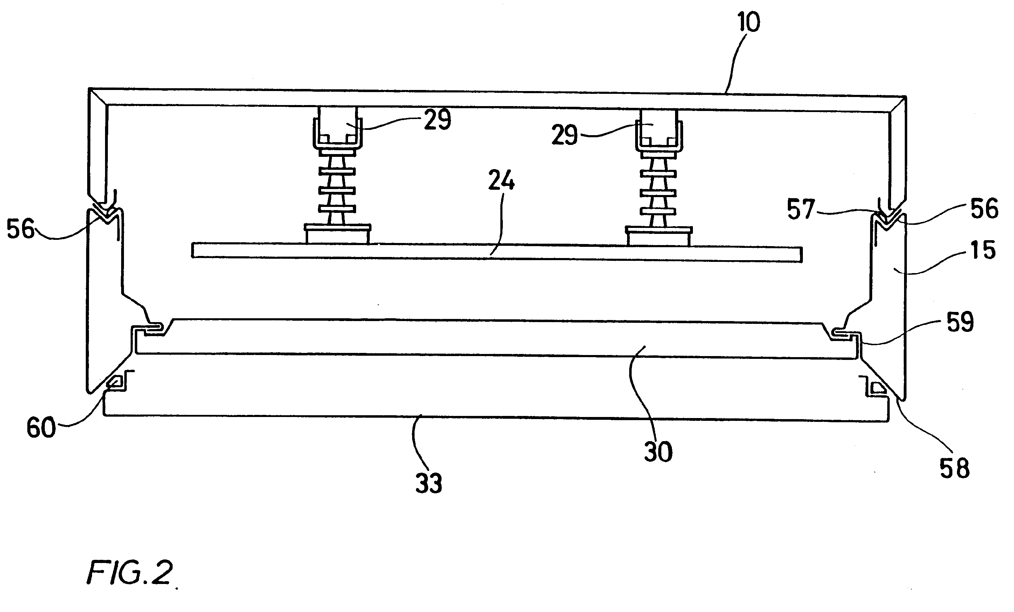

- la figure 2 est une vue en plan et en coupe du coffret selon la figure 1;
- la figure 3 est une vue analogue à celle de la figure 2, le boîtier avec le plastron et la porte étant supposé enlevés;
- la figure 4 est une vue schématique en perspective d'un pilier de fixation selon la figure 1;
- la figure 5 est une vue analogue à celle de la figure 4 montrant le pilier vu de l'arrière.

Sur les figures, le fond 10 d'un coffret d'appareillage électrique est constitué par une plaque de tôle destinée à être fixée à une paroi ou un mur. Les deux bords latéraux 11,12 de la plaque 10 sont repliés en équerre vers l'avant pour former en coopération avec les deux flancs latéraux 13,14 d'un boîtier 15, les deux faces latérales du coffret. Le boîtier 15 en forme de cadre rectangulaire de même dimension que le fond 10 est fixé sur ce dernier, les bords repliés 11,12 étant coplanaires des flancs 13,14 du boîtier 15. Les flancs supérieur 16 et inférieur 17 du boîtier 15 sont échancrés pour définir en position montée sur le fond 10 des ouvertures de passage de câbles, obturées par des plaques passe-câbles 18,19. Les plaques passe-câbles 18,19 présentent des perforations ou ouvertures 20, ou des parties défonçables permettant la pénétration des câbles à l'intérieur du coffret. Dans le volume confiné par le fond 10, le boîtier 15 et les plaques passe-câbles 18,19 est logé un châssis 21 constitué par deux montants 22,23 reliés par des rails profilés symétriques 24, et une platine 26. Des appareils électriques modulaires 27 sont encliquetés sur les rails 24 à profils symétriques, tandis que d'autres appareils 28, par exemple du type à boîtier moulé sont fixés sur la platine 26. Le châssis 21 est fixé au fond 10, au moyen de quatre piliers 29 portés par le fond 10 en regard des extrémités des montants 22,23, fixés par des vis sur ces piliers 29. La face avant du boîtier 15 est obturée par un plastron 30 en une ou plusieurs parties présentant des orifices 31 de passage des parties antérieures des appareils 27,28 et de leurs manettes de commandes manuelles 32. L'ensemble est coiffé par une porte 33 formant la face avant du coffret parallélépipèdique. Les quatre piliers 29 constituent des cales d'écartement des montants 22,23 du fond 10 pour laisser à l'arrière des montants 22,23 un passage des câbles mal frettés, et ces quatre piliers 29 sont espacés des bords latéraux 11,12 pour confiner avec ces derniers des couloirs de passage des câbles de connexion aux appareils 27,28.

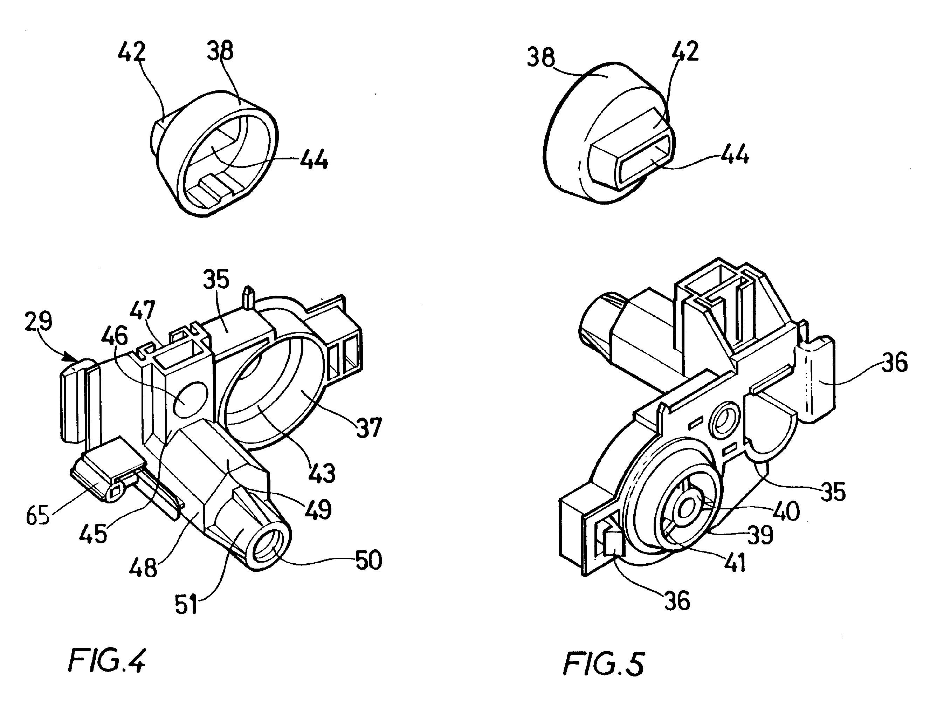

Les piliers 29 sont des pièces moulées en matière plastique isolantes, symétriques deux par deux et représentées en détail sur les figures 4 et 5. Chaque pilier comporte une patte latérale 35 plaquée sur le fond 10 et fixée à ce dernier par des crochets 36 s'encliquetant dans des perforations (non représentées) ménagées dans la tôle de fond 10. La patte 35 porte sur le côté interne au coffret un collet cylindrique 37 dans lequel peut être emboîté à faible jeu, un insert rotatif 38. La face opposée de la patte latérale 35, au contact de la tôle de fond 10, porte, coaxialement au collet 37, une cale cylindrique 39 faisant saillie à travers un orifice (non représenté), de diamètre correspondant, pratiqué dans la tôle de fond 10. Au centre de la cale cylindrique 39 est disposé un moyeu 40 de guidage du foret, ce moyeu étant rattaché à la cale par des rayons brisables 41. Après rupture des rayons 41, l'espace interne de la cale cylindrique 39 est disponible pour recevoir une saillie 42 de forme oblongue portée par l'insert 38. Lors de l'introduction de l'insert 38 dans le collet 37, la saillie oblongue 42 traverse la cale cylindrique 39, pour affleurer avec celle-ci et venir au contact du mur. L'insert 38 est retenu par une face annulaire d'appui 43 disposée à l'interface entre le collet 37 et la cale cylindrique 39. La saillie oblongue 42 présente une fente oblongue 44 de passage de la vis de fixation du fond au mur. Le foret de perçage est guidé par le moyeu 40 et de légers écarts de perçage peuvent être rattrapés par une rotation de l'insert 38 amenant la fente oblongue 44 au regard du trou percé. Le pilier 29 et l'insert 38 peuvent être coulés en une seule pièce, les deux parties étant rattachés par une languette brisable d'une manière bien connue des spécialistes.

Le pilier 29 porte du côté interne du coffret un dé 45 sur lequel s'emboîte le montant en forme de U 22,23. L'extrémité du montant 22,23 est solidarisée au pilier 29 par un boulon, dont la vis traverse un orifice 46, ménagé dans le dé rectangulaire 45 et débouchant dans une rainure 47 de logement de l'écrou du boulon (non représenté). Le pilier 29 porte de plus une colonne 48 de fixation du boîtier 15, cette colonne 48 s'étendant en position montée du pilier 29, perpendiculairement à la tôle de fond 10. La colonne 48 est adjacente au dé 45 et la face 49 du côté du dé 45 est conformée en pente et coin de guidage de l'extrémité du montant 22,23 pour amener et centrer ces montants, lors de la mise en place du châssis 21 sur les piliers 29. Un orifice fileté 50 est percé axialement dans l'extrémité de la colonne 48 pour recevoir une vis de fixation du boîtier 15. La partie externe 51 de l'extrémité de la colonne 48 est conformée en cone de centrage qui coopère avec une pièce conjuguée du boîtier 15 pour positionner correctement le boîtier lors de sa mise en place sur le fond 10. Le pilier 29 selon l'invention assure des multiples fonctions:
- guidage du foret de perçage du mur par le moyeu 40;
- rattrapage d'écart de perçage par une rotation limitée de l'insert 38;
- écartement du fond 10 du mur par les cales 39;
- fixation d'un bornier 64 ou d'un support quelconque;
- centrage et fixation du châssis 21 par les faces 49 et les dés 45, les montants 22,23 étant espacés de la tôle de fond 10;
- centrage et fixation du boîtier 15 sur le fond 10 par les colonnes 48.

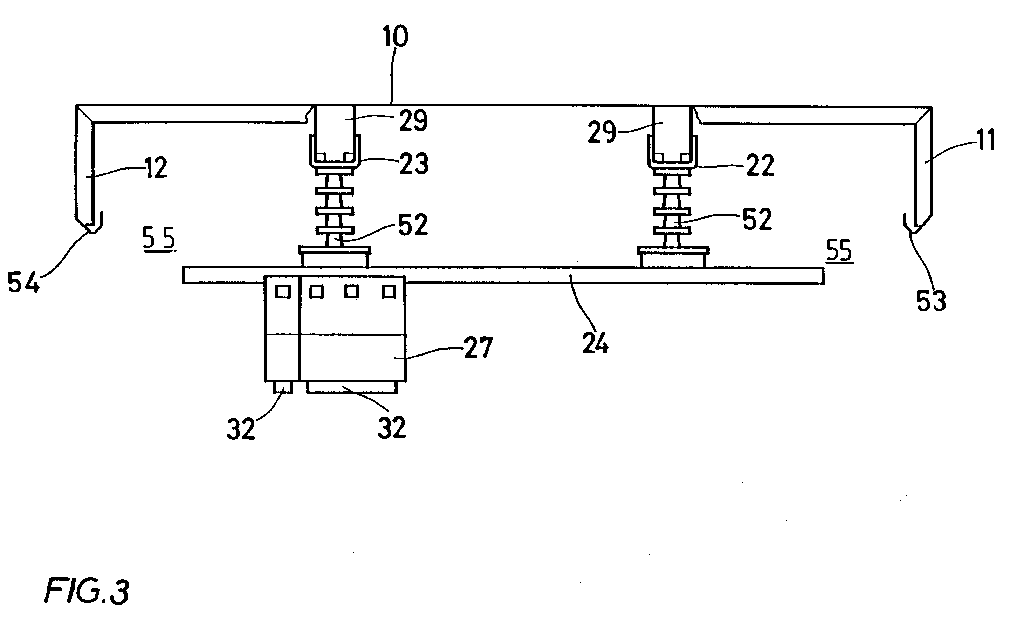

En se référant plus particulièrement à la figure 3, on voit que les rails 24 sont fixés aux montants 22,23 par des entretoises 52, de manière que les rails 24 viennent en saillie des tranches 53,54 des bords repliés 11,12 du fond 10. La longueur des rails 24 est inférieure à la largeur du coffret, en l'occurrence à la distance entre les deux bords 11,12, de manière à ménager entre les extrémités des rails 24 et les tranches 53,54 des goulottes 55 permettant l'introduction des câbles. Le décalage en profondeur des rails 24 par rapport aux tranches 53,54 fournit des goulottes 55 d'introduction de câbles suffisantes, tout en conservant une longueur appréciable des rails de fixation 24. Les tranches 53,54 sont formées par des plis vers l'intérieur de la tôle 10, de manière à constituer un dièdre de centrage du boîtier 15, ce dièdre fournissant en même temps un bord non tranchant évitant toute blessure de la main lors de l'introduction des câbles. Le boîtier 15 présente sur son côté coopérant avec les bords 11,12, une forme conjuguée en dièdre concave 56 venant s'emboîter sur les dièdres convexes des tranches 53,54, lors de la mise en place du boîtier 15 sur le fond 10, en assurant un positionnement et un auto-centrage. La forme en dièdre facilite la disposition d'un joint d'étanchéité 57 entre le boîtier 15 et le fond 10. Ce joint 57 peut être coextrudé ou faire partie d'un film isolant de revêtement de parties métalliques, notamment du fond 10. La tranche avant du boîtier 15 présente une face inclinée vers l'intérieur 58 en forme de pan coupé, la porte 33 venant s'encastrer partiellement à l'intérieur de ce cadre à face inclinée 58. La face inclinée 58 se prolonge vers l'intérieur du coffret par des cornières 59 formant un cadre d'appui des plastrons 30. Les bords de la porte 33, également en tôle, sont repliés vers l'intérieur pour offrir un logement à un joint d'étanchéité 60 qui coopère en position fermée de la porte 33 avec les faces inclinées 58 pour assurer l'étanchéité et le centrage de la porte 33. Les plastrons 30 sont fixés par tout moyen approprié au boîtier 15 et ce dernier est lui-même fixé au fond 10 par des vis traversant des orifices 61 prévus sur des bandeaux supérieurs et inférieurs du boîtier 15, et accessibles de la face avant du coffret. Les orifices 61 et les vis correspondantes peuvent être cachées après fixation du boîtier 15 par des volets ou caches améliorant l'esthétique du coffret. Les vis sont du type imperdable et à freinage évitant un vissage intempestif au cours du transport.

Les bords supérieur et inférieur 62 de la plaque de fond 10 forment un repli de faible hauteur délimitant avec la partie en regard du boîtier 15 une ouverture de passage des câbles, obturée par les plaques 18,19. Sur les bords 62 sont prévues des fentes 63 de passage des frettes de fixation des câbles et les plaques passe-câbles sont fixées au fond 10 par tout moyen opérant, notamment par encliquetage. Un bornier 64 peut être fixé parallèlement aux rails 24 au voisinage des bords supérieur et inférieur, sur un appendice 65 de piliers 29, ou directement sur le fond 10.

Le montage du coffret est réalisé de la manière suivante:

La tôle de fond 10 est livrée avec les piliers 29 fixés à demeure par encliquetage et éventuellement rivetage. Les plaques passe-câbles 18,19 sont solidarisées au fond 10, éventuellement après défonçage ou perçage des orifices 20, ou échancrures de passage des câbles. Les piliers 29 délimitent une zone centrale correspondant sensiblement à la moitié de la largeur du fond 10 et deux zones latérales, chacune d'environ un quart de cette largeur pour l'entrée des câbles qui sont fixés par des frettes traversant les fentes 63. Le fond 10 constitue le gabarit de perçage des trous de fixation au mur, le foret de perçage étant guidé par le moyeu 40. Après perçage des trous et mise en place des chevilles de fixation, il suffit de mettre en place l'insert 38 et de positionner correctement la fente 44 pour le vissage des vis de fixation. Les cales 39 assurent un espacement entre le fond 10 et le mur.

On réalise de préférence le châssis 21 séparément par fixation des rails 24, et de la platine 26, sur les montants 22,23. Les appareils 27,28 peuvent être fixés sur le châssis 21 avant ou après sa mise en place sur les piliers 29. Cette mise en place est facilitée par les faces inclinées 49 et les dés de guidage 45 des piliers 29. Les écrous sont prémontés pour aider à la mise en place des vis de fixation. Le monteur réalise le cablage et les connexions et introduit les câbles latéralement par les goulottes 55. Cette introduction est facilitée par les replis des tranches 53,54 qui retiennent les câbles. Les bornes de connexions des appareils sont facilement accessibles et l'ensemble des connexions peut être réalisé avant la mise en place du boîtier 15. Le boîtier 15 est ensuite, avant ou après mise en place des plastrons 30, emboîté sur le fond 10 et fixé par les vis traversant les orifices 61 et se vissant dans les filetages 50 des piliers 29. La forme en dièdre ou en chicane des tranches 53,54 et des parties conjuguées du boîtier 15 facilite cet emboîtement et la surface interne du dièdre permet l'appui du joint d'étanchéité 57 tandis que la surface externe est orientée pour éviter toute pénétration d'un corps solide, notamment d'un fil de fer dans le coffret. Si le coffret comporte une porte 33, celle-ci peut être montée sur le boîtier 15 avant sa mise en place sur le fond 10, ou après cette mise en place. Les pans coupés 58 et la porte semi-encastrée favorisent l'esthétique du coffret, laquelle est conservée pour un coffret sans porte, par l'absence de toute vis apparente. Le boîtier 15 peut être facilement démonté sans retirer les plastrons 30, par simple enlèvement des quatre vis de fixation au pilier 29. Après enlèvement de ce boîtier 15, tout l'intérieur du coffret est facilement accessible pour la mise en place de nouveaux appareils ou la modification du câblage. Sur les montants 22,23 et/ou sur les rails 24 peuvent bien entendu être fixés les accessoires usuels, tels que par exemple un bornier. Le décalage du châssis 21 par rapport au fond 10 offre un passage aux câbles mal fréttés et les plaques passe-câbles 18,19 qui s'étendent sur toute la largeur du fond 10 offrent un espace maximal d'entrée des câbles.

## Revendications

1. Coffret parallélépipèdique de logement d'appareillage électrique, comprenant un fond (10) en forme de plaque, ayant deux rebords latéraux (11,12), un châssis (21) avec des rails profilés transversaux (24) de fixation de l'appareillage (27,28) et des montants (22,23) fixés audit fond (10) et sur lesquels les rails sont fixés, la longueur des rails profilés étant inférieure à l'écartement des deux rebords latéraux (11,12) pour ménager entre les extrémités des rails profilés et ces rebords (11,12), une goulotte (55) d'introduction des câbles, un boîtier (15) en forme de cadre rectangulaire de même dimension que le fond, un plastron (30) d'obturation de la face avant du boîtier (15) opposée au fond (10) du coffret, ledit plastron (30) ayant une lumière (31) de passage de la partie antérieure de l'appareillage,
caractérisé en ce qu'il comporte au moins une plaque passe-câbles (18,19) intercalée entre le boîtier (15) et le fond (10) pour obturer la face supérieure et/ou inférieure du coffret et comportant des ouvertures (20) permettant l'introduction des câbles à l'intérieur dudit coffret, en ce que la tranche avant de la plaque passe-câbles en position montée est en saillie des tranches avant (53,54) des deux rebords latéraux (11,12) et affleure ou est en saillie vers l'avant du plan contenant les rails profilés (24), en ce que la tranche avant (53,54) des rebords latéraux est en retrait du plan contenant les rails profilés, et que la longueur des rails profilés est supérieure à l'écartement des montants (22,23).

2. Coffret selon la revendication 1, caractérisé par quatre piliers (29) rigidement assujettis au fond (10) et faisant saillie vers l'avant en étant espacés latéralement des rebords latéraux (11,12) pour laisser un passage (55) aux câbles et en ce que lesdits piliers (29) présentent des faces (45) d'appui et de fixation des montants (22,23) en laissant subsister un intervalle de passage des câbles entre les montants (22,23) et le fond (10).

3. Coffret selon la revendication 1 ou 2, caractérisé en ce que les bords latéraux de la plaque formant fond (10) sont pliés en équerre vers l'avant pour former les rebords latéraux précités (11, 12), en ce que le fond (10) est constitué par une tôle et que la tranche avant (53,54) des bords latéraux repliés (11,12) présente des plis vers l'intérieur pour former un dièdre de centrage et d'étanchéité sur lequel s'emboîte la tranche du boîtier conformée en dièdre conjugué.

4. Coffret selon la revendication 1,2 ou 3, caractérisé en ce que chaque pilier (29) de fixation du châssis (21) au fond (10) comporte une patte latérale (35) avec un collet cylindrique (37) de passage d'une vis de fixation du fond au mur et que la section dudit collet (37) est supérieure à la section de ladite vis pour recevoir un insert rotatif (38) à orifice oblong (14) de passage de la vis pour rattraper les écarts de perçage.

5. Coffret selon la revendication 4, caractérisé en ce que le fond (10) dudit collet est doté d'un guide (40) de centrage du foret et que ledit guide est brisable pour autoriser après le perçage la mise en place de l'insert (38).

6. Coffret selon l'une des revendications précédentes, caractérisé en ce que les piliers (29) de fixation du châssis (21) au fond (10) sont agencés en colonnes (48) de fixation du boîtier (15), lesdites colonnes adjacentes et en saillie des faces d'appui (15) des montants (22,23) ayant une face inclinée (49) de guidage et de centrage du châssis (21), qui facilite la fixation du châssis sur les piliers.

7. Coffret selon la revendication 6, caractérisé en ce que le boîtier (15) est fixé aux quatre piliers (29) par des vis imperdables et à auto-freînage se vissant dans l'extrémité des colonnes (48) et que les têtes de ces vis, accessibles sur la face avant sont dissimulées par des volets ou caches fixés au boîtier.

8. Coffret selon l'une quelconque des revendications précédentes, caractérisé en ce que la ou les plaques passe-câbles (18, 19) en matière plastique s'étendent sur toute la largeur du coffret et sont encliquetées sur le fond (10) pour permettre le passage et la mise en place des câbles, le boîtier (15) étant enlevé.

9. Coffret selon l'une quelconque des revendications précédentes, caractérisé en ce que la tranche avant du boîtier présente une face inclinée (58) vers l'intérieur, sur laquelle s'encastre avec interposition d'un joint (60) la porte (33) du coffret, et que la face inclinée (58) se prolonge par une cornière (59) décalée vers l'intérieur du coffret formant un cadre d'appui du plastron (30).

## Patentansprüche

1. Quaderförmiger Installationskasten zur Aufnahme von elektrischen Schaltgeräten, der einen plattenförmigen Boden (10) mit zwei seitlichen Randleisten (11, 12), ein Trägergestell (21) mit querverlaufenden Profilschienen (24) zur Befestigung der Schaltgeräte (27, 28) sowie auf dem genannten Boden (10) befestigten Längsträgern (22, 23), auf denen die Profilschienen befestigt sind, wobei die Länge der Profilschienen geringer ist als der Abstand zwischen den beiden seitlichen Randleisten (11, 12), um zwischen den Enden der Profilschienen und diesen Randleisten (11, 12) einen Kabeleinführungskanal (55) auszubilden, ein als Rechteckrahmen ausgeführtes Gehäuse (15), das die gleichen Abmessungen aufweist wie der Boden, sowie eine Abdeckplatte (30) zum Abschluß der dem Boden (10) des Installationskastens gegenüberliegenden Frontseite des Gehäuses (15) umfaßt, wobei die genannte Abdeckplatte (30) eine Aussparung (31) zur Durchführung des Frontbereichs der Schaltgeräte aufweist,
dadurch gekennzeichnet, daß er mindestens eine, zwischen dem Gehäuse (15) und dem Boden (10) eingefügte und mit Öffnungen (20) zur Einführung von Kabeln in den Innenraum des genannten Installationskastens versehene Kabeldurchführungsplatte (18, 19) zur Abdeckung der oberen und/oder unteren Stirnfläche des Installationskasten aufweist, daß die vordere Kante der Kabeldurchführungsplatte in der eingebauten Stellung die vorderen Auflagekanten (53, 54) der beiden seitlichen Randleisten (11, 12) überragt sowie fluchtend mit der Ebene der Profilschienen (24) abschließt oder nach vorn aus dieser heraussteht, daß die vordere Auflagekante (53, 54) der seitlichen Randleisten gegenüber der Ebene der Profilschienen zurückversetzt ist und daß die Länge der Profilschienen größer ist als der Abstand zwischen den Längsträgern (22, 23).

2. Installationskasten nach Anspruch 1, gekennzeichnet durch vier, fest mit dem Boden (10) verbundene Stützer (29), die nach vorn herausstehen und in bezug auf die seitlichen Randleisten (11, 12) zur Bildung eines Kabelkanals (55) nach innen versetzt sind, sowie dadurch, daß die genannten Stützer (29) Flächen (45) zur Auflage und Befestigung der Längsträger (22, 23) aufweisen, wobei zwischen den Längsträgern (22, 23) und dem Boden (10) ein Zwischenraum zur Durchführung von Kabeln freigehalten ist.

3. Installationskasten nach Anspruch 1 oder 2, dadurch gekennzeichnet, daß die Seitenränder der den Boden bildenden Platte (10) rechtwinklig nach vorn gebogen sind, um die genannten seitlichen Randleisten (11, 12) zu bilden, daß der Boden (10) als Blech ausgeführt ist und daß die vordere Auflagekante (53, 54) der umgebogenen seitlichen Randleisten (11, 12) nach innen gebogene Ränder aufweist, um eine Winkelleiste zur Zentrierung und Abdichtung zu bilden, auf die die zu einer entsprechenden Winkelleiste geformte Auflagekante des Gehäuses aufgesetzt wird.

4. Installationskasten nach Anspruch 1, 2 oder 3, dadurch gekennzeichnet, daß jeder Stützer (29) zur Befestigung des Trägergestells (21) am Boden (10) einen seitlichen Schenkel (35) mit einem zylindrischen Topf (37) aufweist, der zur Durchführung einer Schraube für die Befestigung des Bodens an der Wand dient, und daß der Querschnitt des genannten Topfs (37) größer ist als der Querschnitt der genannten Schraube, um zum Ausgleich von Bohrfehlern einen Dreheinsatz (38) mit einem Durchführungsschlitz (44) für die Schraube aufnehmen zu können.

5. Installationskasten nach Anspruch 4, dadurch gekennzeichnet, daß der Boden (10) des genannten Topfs eine Führung (40) zur Zentrierung des Bohrers aufweist und daß die genannte Führung ausbrechbar ist, um nach dem Anfertigen der Bohrung den Dreheinsatz (38) einsetzen zu können.

6. Installationskasten nach irgendeinem der vorhergehenden Ansprüche, dadurch gekennzeichnet, daß die Stützer (29) zur Befestigung des Trägergestells (21) am Boden (10) als Befestigungszapfen (48) für das Gehäuse (15) ausgebildet sind, wobei die genannten, an die Auflageflächen (15) für die Längsträger (22, 23) grenzenden und diese Auflageflächen überragenden Zapfen eine geneigte Fläche (49) zur Zentrierung und Positionierung des Trägergestells (21) aufweisen, die die Befestigung des Trägergestells auf den Stützern erleichtert.

7. Installationskasten nach Anspruch 6, dadurch gekennzeichnet, daß das Gehäuse (15) durch in das Ende der Zapfen (48) eingedrehte, unverlierbare und selbstsichernde Schrauben auf den vier Stützern (29) befestigt ist und daß die von der Frontseite zugänglichen Köpfe dieser Schrauben durch am Gehäuse befestigte Blenden oder Abdeckkappen verdeckt sind.

8. Installationskasten nach irgendeinem der vorhergehenden Ansprüche, dadurch gekennzeichnet, daß sich die aus Kunststoff bestehenden Kabeldurchführungsplatten (18, 19) über die gesamte Breite des Installationskastens erstrecken und auf dem Boden (10) aufgeschnappt sind, um bei abgenommenem Gehäuse (15) die Durchführung und das Verlegen der Kabel zu ermöglichen.

9. Installationskasten nach irgendeinem der vorhergehenden Ansprüche, dadurch gekennzeichnet, daß die vordere Auflagekante des Gehäuses eine nach innen geneigte Fläche (58) aufweist, an die die Tür (33) des Installationskastens unter Zwischenfügung einer Dichtung (60) angepaßt wird und daß die geneigte Fläche (58) in einen zum Innenraum des Installationskastens hin versetzten Winkelabsatz (59) übergeht, der einen Auflagerahmen für die Abdeckplatte (30) bildet.

## Claims

1. A parallelipipedic cabinet for housing electrical apparatus, comprising a back in the form of a plate (10) having two side flanges (11, 12), a frame (21) with profiled transverse rails (24) for fixing the apparatus (27, 28) and uprights (22, 23) fixed to said back plate (10) and on which the rails are fixed, the length of the profiled rails being smaller than distance separating the two side flanges (1, 12) to arrange between the ends of the profiled rails and these flanges (11, 12) a trunking (55) for insertion of the cables, an enclosure (15) in the form of a rectangular frame of the same size as the back plate, a front plate (30) blanking off the front face of the enclosure (15) opposite the back plate (10) of the cabinet, said front plate (30) having an aperture (31) for the front part of the apparatus to pass through,
characterized in that it comprises at least one cable grommet plate (18, 19) inserted between the enclosure (15) and back plate (10) to blank off the upper and/or lower face of the cabinet and comprising openings (20) enabling the cables to be inserted in said cabinet, that the front edge of the grommet plate in the assembled position protrudes out from the front edges (53, 54) of the two side flanges (11, 12) and is flush with or protrudes out frontwards from the plane containing the profiled rails (24), that the front edge (53, 54) of the side flanges is set back from the plane containing the profiled rails, and that the length of the profiled rails is greater than the distance between the uprights (22, 23).

2. The cabinet according to claim 1, characterized by four props (29) securedly united to the back plate (10) and protruding out frontwards being located with lateral clearance from the side flanges (11, 12) to leave a passage (55) for the cables and that said props (29) have faces (45) for bearing and fixing of the uprights (22, 23) leaving a clearance for the cables to pass between the uprights (22, 23) and the back plate (10).

3. The cabinet according to claim 1 or 2, characterized in that the side edges of the plate forming the back plate (10) are folded frontwards at right angles to form the aforementioned side flanges (11, 12), that the back plate (10) is formed by a sheet metal plate and that the front edge (53, 54) of the folded side edges (11, 12) has inward folds to form a centering and sealing dihedron on which the edge of the enclosure shaped as a conjugate dihedron dovetails.

4. The cabinet according to claim 1, 2 or 3, characterized in that each prop (29) for fixing the frame (21) to the back plate (10) comprises a lateral flange (35) with a cylindrical collar (37) for passage of a screw fixing the back plate to the wall, and that the cross-section of said collar (37) is greater than the cross-section of said screw to receive a rotating insert (38) with an oblong orifice (14) for passage of the screw to compensate for drilling deviations.

5. The cabinet according to claim 4, characterized in that the back plate (10) of said collar is provided with a guide (40) for centering the bit, and that said guide is breakable to enable the insert (38) to be fitted after drilling.

6. The cabinet according to one of the above claims, characterized in that the props (29) for fixing the frame (21) to the back plate (10) are arranged as columns (48) for fixing the enclosure (15), said columns adjacent to and protruding out from the bearing faces (15) of the uprights (22, 23) having an inclined face (49) for guiding and centering the frame (21), which facilitates fixing of the frame on the props.

7. The cabinet according to claim 6, characterized in that the enclosure (15) is secured to the four props (29) by self-locking unloosable screws which screw into the end of the columns (48) and that the heads of these screws, accessible on the front panel, are hidden by flaps or caches fixed to the enclosure.

8. The cabinet according to one of the above claims, characterized in that the cable grommet plate or plates (18, 19) made of plastic material extend over the whole width of the cabinet and are clipped onto the back plate (10) to enable the cables to pass through and be fitted, the enclosure (15) having been removed.

9. The cabinet according to one of the above claims, characterized in that the front edge of the enclosure has an inwardly inclined face (58), on which the door (33) of the cabinet fits with a seal (60) interposed, and that the inclined face (58) is extended by a corner-piece (59) offset towards the inside of the cabinet forming a support frame for the front plate (30).
